# EUROPEAN PATENT APPLICATION

(11) **EP 4 030 707 A1**
(43) Date of publication of application: **20.07.2022**
(21) Application number: 21151866.7
(22) Date of filing: 15.01.2021
(51) Int. Cl.: H04L 12/801, H04L 29/06

(54) **A NETWORK DEVICE AND A METHOD**

(71) Applicant: NXP B.V., 5656 AG Eindhoven (NL)
(72) Inventor: Roy,, Rajeev, 5656 AG Eindhoven (NL)
(74) Representative: Krott, Michel

(57) **Abstract**

A network device for processing a plurality of redundant data streams, the network device configured to: receive a frame from one of the plurality of redundant data streams; compare a sequence number of the frame to a stored sequence number; and if the sequence number of the frame is greater than the stored sequence number: forward the frame to an output terminal of the network device; and update the stored sequence number based on the sequence number of the frame.

## Description

### Field

The present disclosure relates to a network device and a method and in particular to a network device and method for processing redundant data streams.

### Summary

According to a first aspect of the present disclosure there is provided a network device for processing a plurality of redundant data streams, the network device configured to:
receive a frame from one of the plurality of redundant data streams;
compare a sequence number of the frame to a stored sequence number; and
if the sequence number of the frame is greater than the stored sequence number:
   forward the frame to an output terminal of the network device; and
   update the stored sequence number based on the sequence number of the frame.

The network device can apply a sequence recovery algorithm with an improved performance compared to a match algorithm and a reduced resource requirement compared to a vector algorithm. The network device can advantageously provide vector algorithm like performance with match algorithm like resource requirements.

In one or more embodiments, the network may be further configured to discard the frame if the sequence number of the frame is less than or equal to the stored sequence number.

In one or more embodiments, the network device may be configured to update the stored sequence number by replacing the stored sequence number with the sequence number of the frame.

In one or more embodiments, the stored sequence number may comprise a single sequence number.

In one or more embodiments, the stored sequence number may correspond to a sequence number of an earlier frame of one of the plurality of redundant data streams.

In one or more embodiments, the network device may be configured to:
if the sequence number of the frame is between zero and a first threshold and the stored sequence number is between a second threshold less than a maximum value of a range of sequence numbers of the plurality of redundant data streams and the maximum value:
forward the frame to an output terminal of the network device; and
update the stored sequence number based on the sequence number of the frame.

In one or more embodiments, the network device may be configured to:
if the sequence number of the frame is zero and the stored sequence number is equal to the maximum value:
forward the frame to an output terminal of the network device; and
update the stored sequence number based on the sequence number of the frame.

In one or more embodiments, the frames of the plurality of redundant data streams may comprise a sequence number in a redundancy tag of a frame header.

In one or more embodiments, the network device may be configured to determine the plurality of redundant data streams as redundant data streams.

In one or more embodiments, the network device may be configured to determine the plurality of redundant data streams as redundant data streams by comparing a unique index in a frame header of the frames of the plurality of redundant data streams to an entry in a generation and recovery look-up table.

In one or more embodiments, the network device may comprise a sequence number registry configured to store the stored sequence value.

In one or more embodiments, the network device may be an automotive network device.

According to a second aspect of the present disclosure there is provided a method for processing a plurality of redundant data streams received at a network device, the method comprising:
receiving a frame from one of the plurality of redundant data streams;
comparing a sequence number of the frame to a stored sequence number; and
if the sequence number of the frame is greater than the stored sequence number:
   forwarding the frame to an output terminal of the network device; and
   updating the stored sequence number based on the sequence number of the frame.

In one or more embodiments, the method may further comprise:
discarding the frame if the sequence number of the frame is less than or equal to the stored sequence number.

In one or more embodiments, updating the stored sequence number may comprise replacing the stored sequence number with the sequence number of the frame.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 illustrates an example network system employing redundant data streams;
Figures 2A and 2B illustrate a redundant stream combiner employing a match algorithm for first and second redundant bit streams;
Figure 3 illustrates a redundant stream combiner employing the match algorithm for first and second redundant bit streams comprising a large delay;
Figure 4 illustrates a redundant stream combiner employing a vector algorithm for first and second redundant bit streams comprising a large delay;
Figure 5 illustrates a redundant stream combiner according to an embodiment of the present disclosure; and
Figure 6 illustrates a method of processing a plurality of redundant data streams according to an embodiment of the present disclosure.

### Detailed Description

Redundant data streams may be required in network systems and networked devices to ensure data reliability and account for potential errors or interrupts in transmission paths. Many networked systems may make use of redundant data streams. For example, local area networks in buildings or automobiles. A source network device may make use of redundant data streams by duplicating a stream of data and sending the duplicated streams over different paths to a destination network device. If there is an error in one of the paths, then the destination network device may still receive the stream of data from the other path. The destination network device or an intermediate device can merge the multiple streams such that only a single copy of the frame is received at the destination network device, thereby ensuring that the stream at the receiving node is seamless.

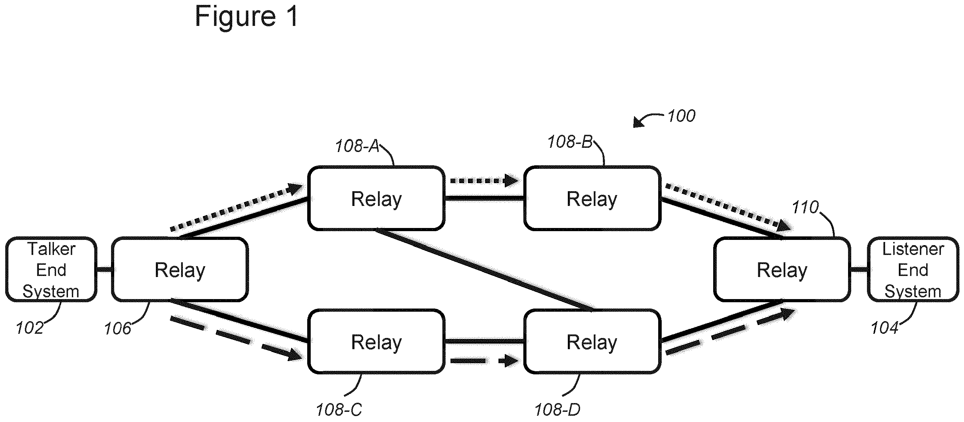

Figure 1 illustrates an example network system 100. The network system comprises a source device 102, a destination device 104, a redundant stream generator 106, a plurality of relay devices 108 and a redundant stream combiner 110.

The redundant stream generator 106 may receive a primary data stream from the source device 102. The redundant stream generator 106 may identify the primary data stream as a data stream requiring the generation of redundant data streams by comparing the primary data stream with a look-up table. For example, the redundant stream generator 106 may compare a header of the primary data stream with the look up table. The look-up table may indicate that data in the primary data stream is of a type or nature that requires the generation of redundant streams. For example, the data may be used in a safety-critical system.

The redundant stream generator 106 may generate the first and second redundant data streams based on the primary data stream. For example, the redundant stream generator 106 may forward the primary data stream to two output ports as the first and second redundant data streams.

The redundant stream generator 106 may identify the primary data stream as a stream that requires the generation of redundant data streams for transmission over a network. For example, the redundant stream generator 106 may analyze an identifier of the primary data stream and access a generation and look-up table to determine whether the identifier corresponds to a redundancy requirement. The redundancy requirement may correspond to a degree of redundancy and / or any required modifications of the bits of the redundant streams. The identifier may correspond to specific bits of the primary data stream, for example a header of the stream. The identifier may identify the type of stream, for example an IP stream.

The redundant stream generator 106 may modify bits of the primary data stream when generating the redundant data streams. For example, the redundant stream generator may modify a header of the primary data stream when generating the redundant data streams. The redundant stream generator 106 may include sequence numbers in each of the first and second redundant data streams to identify each frame in the redundant data streams. The sequence numbers may comprise a consecutive sequence of numbers for each frame, for example 0 to 127. The redundant stream generator may include a redundancy tag (R-tag) in each frame of a redundant stream to identify the sequence number of the frame.

The redundant stream generator 106 may output the first redundant stream to a first path comprising a first plurality of relay devices 108-A, 108-B and output the second redundant stream to a second path comprising a second plurality of relay devices 108-C, 108-D. The first and second path may comprise different paths on the same transmission line, for example, different ports. The first and second paths may comprise different transmission lines. The first and second paths may be wired or wireless paths. In some examples, the first and second paths may comprise the same nominal path length or effective path length (accounting for transmission speed) to enable the first and second redundant streams to arrive at the destination device 104 at the same time.

The redundant stream combiner 110 receives the first redundant stream from the first path and the second redundant stream from the second path. In this way, the redundant stream combiner receives a plurality of redundant data streams. The redundant stream combiner 110 may identify the first and second redundant streams as redundant streams. The redundant stream combiner 110 may compare the identifier of the first and second data redundant data streams, to an entry in the generation and recovery look-up table, to identify that they relate to the same primary data stream. The redundant stream combiner 110 may then merge the first and second redundant streams to form a single data stream for the destination device 104. The redundant stream combiner 110 may merge the redundant streams by comparing frames of the first and second redundant streams and discarding duplicate frames. The merging or combining function of the redundant stream combiner is known as sequence recovery.

Sequence recovery may be used to merge redundant streams (as described above) or check for latent errors in individual streams. The redundant stream combiner 110 may perform sequence recovery by detecting duplicate (or multiple) copies of a merged stream or repeated sequences in the case of an individual stream.

The IEEE802.1CB standard provides an Open Systems Interconnection (OSI) layer 2 mechanism to ensure seamless redundancy in network systems. The standard describes two algorithms for sequence recovery: (i) the match algorithm; and (ii) the vector algorithm.

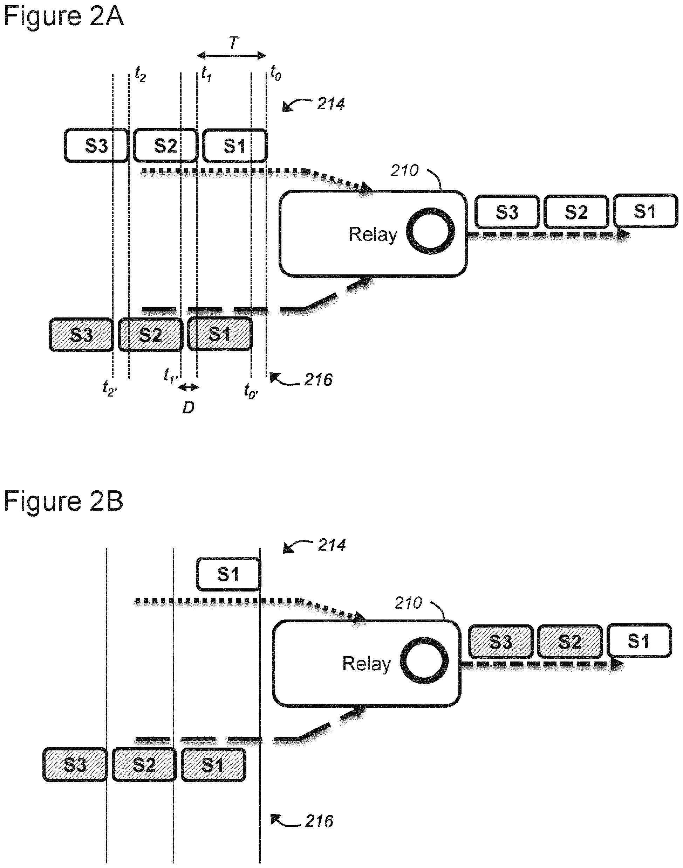

Figures 2A and 2B illustrate an example of a redundant stream combiner 210 using the match algorithm on redundant data streams.

The redundant stream combiner 210 receives a first redundant data stream 214 from a first path and a second redundant data stream 216 from a second path. Each redundant data stream 214, 216 comprises a plurality of frames. Frames in the second redundant data stream 216 are illustrated by a diagonal pattern fill. In the examples of Figures 2A and 2B the redundant stream combiner 210 receives the (frames of the) first redundant data stream 214 before the second redundant data stream 216. In other words, there is a delay, D, between receiving the first redundant data stream 214 and the second redundant data stream 216. In this example, the delay, *D,* is less than an inter-frame-spacing, *T,* of the frames in the data streams 214, 216. The inter-frame-spacing, *T,* is the time between successive frames which may or may not be constant within a particular data stream. The delay, *D,* may result from a delay or latency on the second path.

The redundant stream combiner 210 may identify that the first and second redundant data streams 214, 216 belong to the same primary data stream as described above.

At a first time, *t₀,* the redundant stream combiner 210 receives a first frame, comprising a first sequence number, *S1*, from the first redundant data stream 214. As this is the first frame received, the redundant stream combiner 210 may forward this first frame, S1, to the output port. In response to receiving the first frame, the redundant stream combiner 210 may initiate a time-out timer. The time-out timer can define a time-out time within which the redundant stream combiner 210 expects to receive a further frame. If a further frame is received, the redundant stream combiner may reset the time-out timer. This process can continue until no further frames are received before the time-out timer expires. Any further frames may then be treated as a new data stream. The time-out time may be set based on a number of network parameters, such as a minimum expected data transmission rate.

At a later time, *t_{0'},* (equal to the delay, *D,* after the first time, *to)* the redundant stream combiner 210 receives a first frame, comprising the first sequence number S1, from the second redundant data stream 216. Using the match algorithm, the redundant stream combiner 210 can compare the first sequence number, *S1*, of the first frame of the first data stream 214 with the first sequence number, *S1,* of the first frame of the second data stream 216. The redundant stream combiner 210 detects a match in sequence numbers and discards the first frame of the second redundant data stream 216. In response to receiving the first frame of the second redundant data stream, the redundant stream combiner may reset the time-out timer.

In Figure 2A, the redundant stream combiner 210 receives a second frame comprising a second sequence number, S2, from the first data stream 214 at a later time, *t₁.* Using the match algorithm, the redundant stream combiner 210 can compare the second sequence number, *S2,* of the second frame of the first data stream 214 with the first sequence number, *S1,* of the first frame of the second data stream 216. The redundant stream combiner 210 may detect a difference in sequence numbers and forward the second frame of the first redundant data stream 214 to the output port.

The redundant stream combiner 210 may continue to perform the match algorithm upon the receipt of each new frame by comparing the newly received frame with the previously received frame. If the sequence numbers of the frames match, the redundant stream combiner 210 discards the newly received frame. If the sequence numbers differ, the newly received frame is forwarded to the output port.

In the example of Figure 2A, frames of the first redundant data stream 214 are always maintained because these arrive first. Frames of the second redundant data stream 216 are always discarded because they arrive after the corresponding same frame in the first redundant data stream 214. In the example of Figure 2B, the second and third frame of the first redundant data stream 214 have been lost in transmission. As a result, the redundant stream combiner 210 detects the second and third frames of the second redundant data stream 216 with no corresponding frames in the first redundant data stream 214. The redundant data stream combiner therefore forwards the second and third data frames of the second redundant data stream 216 to the output port.

In the examples of Figures 2A and 2B, the redundant stream combiner 210 merges a plurality of redundant data streams and eliminates duplicate frames to produce a single output stream corresponding to the primary data stream.

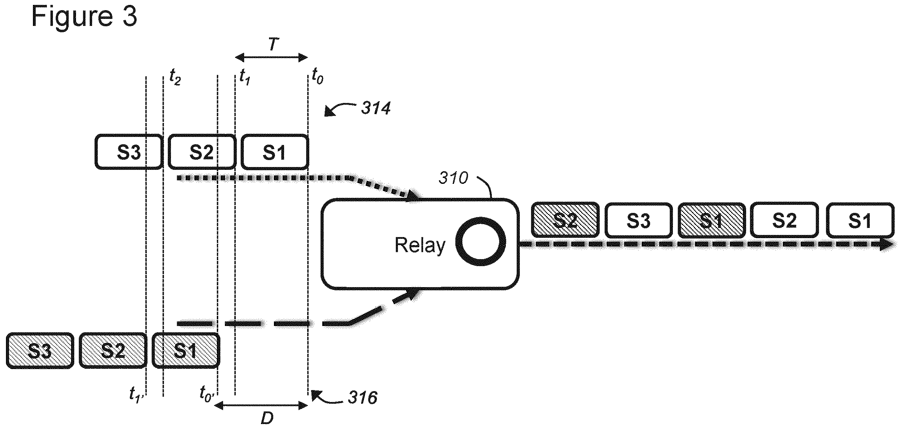

Figure 3 illustrates an example redundant stream combiner 310 using the match algorithm on a first and second data stream 314, 316. Features of Figure 3 that are also present in Figure 2 have been given corresponding reference numbers in the 300 series and will not necessarily be described again here.

This example illustrates a limitation of the match algorithm in a scenario where the second redundant data stream is delayed relative to the first redundant data stream by more than the inter-frame-spacing (*D*>*T*).

In this example, the redundant stream combiner 310 receives a second frame of the first redundant data stream 314 before receiving the first frame of the second redundant data stream 316. As a result, when the redundant stream combiner 310 uses the match algorithm to compare a sequence number of a most recent frame of the first redundant data stream 314 with a most recent frame of the second redundant data stream, they always differ. As a result, the redundant stream combiner incorrectly maintains all frames of the two redundant data streams 314, 316. An output data stream contains incorrectly ordered - duplicated frames.

A further issue with the match algorithm can arise when a frame is delayed such that the time-out timer expires before it is received. As an example, if the second and third frame of the first redundant data stream 314 were absent (like Figure 2B), then the redundant stream combiner 310 would receive the first frame of the second redundant data stream 316 as the next frame after the first frame. As the sequence numbers, S1, of these frames match, the match algorithm may be expected to discard the first frame of the second redundant data stream 316. However, if the delay, D, is longer than the time-out time, then the logic may be reset and the first frame of the second redundant data stream may be maintained.

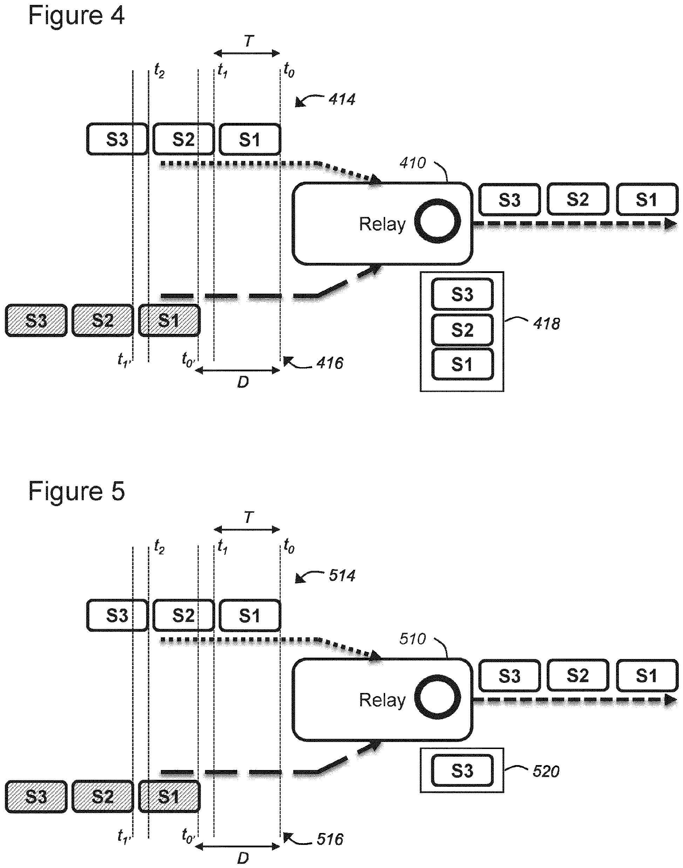

Figure 4 illustrates an example redundant stream combiner 410 using the vector algorithm on a first and second data stream. Features of Figure 4 that are also present in Figure 2 or Figure 3 have been given corresponding reference numbers in the 400 series and will not necessarily be described again here.

In this example, the redundant stream combiner 410 comprises a memory 418 that defines a history window of received sequence numbers. In this example, the memory can store the sequence numbers of three frames (a frame-depth of three).

The first redundant data stream 414 and second redundant data stream arrive with the same timings as those of Figure 3, with a delay, *D,* of the second stream 416 relative to the first stream 414 being greater than the inter-frame-spacing, *T.*

Using the history window stored in the memory 418, the redundant stream combiner 410 can compare any frame received from either redundant data stream 414, 416 against the history window. If a sequence number of the received frame differs from each of the sequence numbers in the memory 418, then the redundant stream combiner 410 will forward the frame to the output port. The redundant stream combiner can also update the memory to contain the new sequence number of the received frame, replacing the oldest sequence number in the memory 418. If the sequence number of the received frame matches any of the sequence number stored in the memory, the redundant stream combiner can discard the received frame.

The vector algorithm overcomes the limitations of the match algorithm by comparing received frames with historically received frames. However, this additional capability requires additional resources (additional hardware and/or software) to store the historical knowledge. The amount of resource depends on the depth of historical knowledge (number of historical frames).

Figure 5 illustrates a redundant stream combiner 510 according to an embodiment of the present disclosure. Features of Figure 5 present in any of Figures 2 to 4 have been given corresponding numbers in the 500 series and will not necessarily be described again here.

The redundant stream combiner 510 is an example of a network device which may be any of: a network switch, a microcontroller, a microprocessor, a network processor or a similar network device. The redundant stream combiner may be implemented in hardware and / or software.

The redundant stream combiner 510 applies a sequence recovery algorithm with an improved performance compared to the match algorithm and a reduced resource requirement compared to the vector algorithm. The redundant stream combiner 510 can advantageously provide vector algorithm like performance with match algorithm like resource requirements.

The redundant stream combiner 510 can process a plurality of redundant data streams. The redundant stream combiner 510 receives a frame from one of the plurality of redundant data streams and compares a sequence number of the frame to a stored sequence number in a sequence number registry 520. If the sequence number is greater than the stored sequence number, the redundant stream combiner 510: forwards the frame to an output terminal of the redundant stream combiner 510; and updates the stored sequence number with the sequence number of the frame. If the sequence number is less than or equal to the stored sequence number, the redundant stream combiner 510 may discard the frame.

Operation of the redundant stream combiner 510 will now be discussed for first and second redundant data streams 514, 516 in relation to Figure 5. A person skilled in the art will appreciate that the redundant stream combiner 510 can perform the same operation for any number of received redundant data streams.

The redundant stream combiner 510 may identify that the first and second redundant data streams 514, 516 belong to the same primary data stream as described above in relation to Figure 1.

At a first time, *t₀,* the redundant stream combiner 510 receives a first frame of the first redundant data stream 514, comprising a first sequence number, *S1*. Initially, the sequence number registry 520 may be empty or may have a default null value. The redundant stream combiner 510 compares the first sequence number, *S1*, with the stored value in the sequence number registry 520. As the first sequence number is greater than the stored value (any value may be considered greater than the empty value or null value), the redundant stream combiner 510 forwards the first frame to the output port. The redundant stream combiner 510 also replaces the value in the sequence number registry 520 with the first sequence number, *S1*.

At a later time, *t₁,* equal to the inter-frame-spacing, *T*, of the first redundant data stream 514, the redundant stream combiner 510 receives a second frame of the first redundant data stream 514 comprising a second sequence number, *S2.* The redundant stream combiner 510 compares the second sequence number, *S2,* with the stored value (S1) in the sequence number registry 520. As the second sequence number is greater than the stored value (S1), the redundant stream combiner 510 forwards the second frame to the output port. The redundant stream combiner 510 also replaces the value in the sequence number registry 520 with the second sequence number, *S2.*

At a later time, *t_{0'},* equal to the delay, *D,* of the second redundant data stream 516, after the receipt of the first frame of the first data stream 514, the redundant stream combiner 510 receives a first frame of the second redundant data stream 516, comprising the first sequence number, *S1*. The redundant stream combiner 510 compares the first sequence number, *S1,* with the stored value (S2) in the sequence number registry 520. As the first sequence number is less than the stored value (S2), the redundant stream combiner 510 discards the first frame of the second redundant data stream 516. The redundant stream combiner 510 does not adjust the value of the sequence number registry 520.

The process continues at time, t2, when the redundant stream combiner 510 receives a third frame of the first redundant data stream 514. The redundant stream combiner 510 will continue to compare the sequence numbers of received frames with the value stored in the sequence number registry 520. If the value of the received frame is greater than the value in the sequence number registry 520, the redundant stream combiner 510 will forward the frame to the output port and update the registry 520. If the sequence number of the received frame is less than or equal to the value in the sequence number registry, the redundant stream combiner 510 can discard the frame.

The redundant stream combiner 510 is tolerant to the timeout issue described above in relation to Figure 3. As described above, a timeout timer is reset upon receipt of every frame. In the event that a duplicate frame is received after expiry of the timeout time, the redundant stream combiner 510 may advantageously still discard the duplicate frame because it is compared with the value in the sequence number registry 520. Therefore, the redundant stream combiner is advantageously tolerant to timeouts of the timeout timer resulting from severely delayed packets.

The redundant stream combiner 510 can update the sequence number registry by replacing the stored sequence number with the sequence number of the received frame. In other words, the sequence number registry 520 can store a single sequence number value. In this way, the depth of frame for reference is one (similar to the matched algorithm) and no additional resources are required relative to the matched algorithm. The sequence number registry 520 may form part of the redundant stream combiner 510 or may be external.

In some examples, the sequence number of the received frames of a data stream may only vary within a fixed range, for example 0 to 127 or 0 to 255. In some examples, the redundant stream combiner 510 is configured to include an additional condition that allows for this. For example, the redundant stream combiner 510 may include a rule that states that 0 is greater than a maximum value of the sequence number (but still less than 1) when comparing sequence numbers. In this way, the redundant stream combiner 510 is configured to forward a received frame to the output port and update the stored sequence number if the sequence number is zero and the stored sequence number is equal to the maximum value of a range of sequence numbers. In some examples, the redundant stream combiner 510 may allow for some additional tolerance in this roll-over effect. The redundant stream combiner 510 may forward the received frame and update the registry 520 if the sequence number of the received frame is between a minimum value (which can be zero) and a threshold value and the stored sequence number in the sequence number registry 250 is between a second threshold value and the maximum value of a range of sequence numbers. For example, if a data stream may comprise sequence numbers from 0 to 255, then the redundant stream combiner 510 may consider any sequence number 0 to 3 as greater than any sequence number 253-255 (here the threshold value and second threshold value are equal to 3).

In some examples, the redundant stream combiner 510 may comprise a frame memory for temporarily storing received frames while they are compared against the stored sequence number in the sequence number registry 520. The redundant stream combiner 510 may comprise a frame memory for each of the plurality of redundant data streams. For example, the redundant stream combiner 510 may comprise a scratchpad memory for storing a received frame of a redundant data stream. The received frame can then be compared to the stored sequence number. If a sequence number of the received frame is greater than the stored sequence number, the redundant stream combiner 510 forwards the received frame to the output port. If the sequence number of the received frame is less than or equal to the stored sequence number, the redundant stream combiner 510 may erase the received frame from the scratchpad memory. As a result, the redundant stream combiner 510 erases duplicate frames in the plurality redundant data streams 514, 516.

The redundant stream combiner 510 may output a merged output data stream to a network destination device as illustrated in Figure 1. It will also be appreciated that in some examples, the redundant stream combiner 510 may comprise the network destination device. The redundant stream combiner 510 may be integrated into any network device that requires the functionality of sequence recovery for a received plurality of redundant data streams.

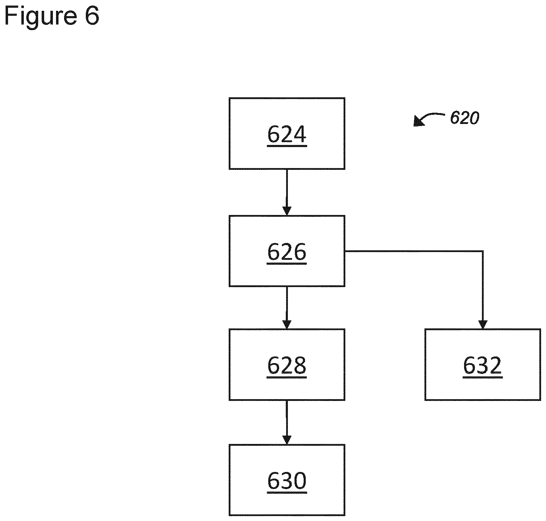

Figure 6 illustrates a method 622 for processing a plurality of redundant data streams received at a network device according to an embodiment of the present disclosure.

A first step of the method 622 comprises receiving 624 a frame from one of the plurality of redundant data streams. A second step comprises comparing 626 a sequence number of the frame to a stored sequence number. If the sequence number of the frame is greater than the stored sequence number, the method proceeds to step 628 and forwards the frame to an output terminal of a network device. At step 630, the method updates the stored sequence number based on the sequence number of the frame. If, at step 626, the sequence number of the frame is less than or equal to the stored sequence number, the method may proceed to optional step 632 and discard the frame.

The disclosed network devices and methods provide an algorithm to check if received sequence numbers are increasing (thus increasing the functionality of the match algorithm) without actually increasing the silicon resources and thus giving a means to get vector algorithm like performance.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A network device for processing a plurality of redundant data streams, the network device configured to:
receive a frame from one of the plurality of redundant data streams;
compare a sequence number of the frame to a stored sequence number; and
if the sequence number of the frame is greater than the stored sequence number:
forward the frame to an output terminal of the network device; and
update the stored sequence number based on the sequence number of the frame.

2. The network device of claim 1, further configured to discard the frame if the sequence number of the frame is less than or equal to the stored sequence number.

3. The network device of claim 1 or claim 2, wherein the network device is configured to update the stored sequence number by replacing the stored sequence number with the sequence number of the frame.

4. The network device of any preceding claim, wherein the stored sequence number comprises a single sequence number.

5. The network device of any preceding claim, wherein the stored sequence number corresponds to a sequence number of an earlier frame of one of the plurality of redundant data streams.

6. The network device of any preceding claim, configured to:
if the sequence number of the frame is between zero and a first threshold and the stored sequence number is between a second threshold less than a maximum value of a range of sequence numbers of the plurality of redundant data streams and the maximum value:
forward the frame to an output terminal of the network device; and
update the stored sequence number based on the sequence number of the frame.

7. The network device of claim 6, configured to:
if the sequence number of the frame is zero and the stored sequence number is equal to the maximum value:
forward the frame to an output terminal of the network device; and
update the stored sequence number based on the sequence number of the frame.

8. The network device of any preceding claim, wherein frames of the plurality of redundant data streams comprise a sequence number in a redundancy tag of a frame header.

9. The network device of any preceding claim, configured to determine the plurality of redundant data streams as redundant data streams.

10. The network device of claim 9, wherein the network device is configured to determine the plurality of redundant data streams as redundant data streams by comparing an identifier of the frames of the plurality of redundant data streams to an entry in a generation and recovery look-up table.

11. The network device of any preceding claim comprising a sequence number registry configured to store the stored sequence value.

12. The network device of any preceding claim, wherein the network device is an automotive network device.

13. A method for processing a plurality of redundant data streams received at a network device, the method comprising:
receiving a frame from one of the plurality of redundant data streams;
comparing a sequence number of the frame to a stored sequence number; and
if the sequence number of the frame is greater than the stored sequence number:
forwarding the frame to an output terminal of the network device; and
updating the stored sequence number based on the sequence number of the frame.

14. The method of claim 13, further comprising:
discarding the frame if the sequence number of the frame is less than or equal to the stored sequence number.

15. The method of claim 13 or claim 14, wherein updating the stored sequence number comprises replacing the stored sequence number with the sequence number of the frame.

## Amended claims

### Amended claims in accordance with Rule 137(2) EPC.

1. A network device (510) for processing a plurality of redundant data streams (514, 516), the network device (510) configured to:
receive a frame from one of the plurality of redundant data streams (514, 516);
compare a sequence number of the frame to a stored sequence number;
if the sequence number of the frame is greater than the stored sequence number:
forward the frame to an output terminal of the network device (510); and
update the stored sequence number based on the sequence number of the frame; and
if the sequence number of the frame is less than or equal to the stored sequence number:
discard the frame; and
refrain from updating the stored sequence number.

2. The network device (510) of claim 1, wherein the network device (510) is configured to update the stored sequence number by replacing the stored sequence number with the sequence number of the frame.

3. The network device (510) of any preceding claim, wherein the stored sequence number comprises a single sequence number.

4. The network device (510) of any preceding claim, wherein the stored sequence number corresponds to a sequence number of an earlier frame of one of the plurality of redundant data streams.

5. The network device (510) of any preceding claim, configured to:
if the sequence number of the frame is between zero and a first threshold and the stored sequence number is between a second threshold less than a maximum value of a range of sequence numbers of the plurality of redundant data streams and the maximum value:
forward the frame to an output terminal of the network device (510); and
update the stored sequence number based on the sequence number of the frame.

6. The network device (510) of claim 5, configured to:
if the sequence number of the frame is zero and the stored sequence number is equal to the maximum value:
forward the frame to an output terminal of the network device (510); and
update the stored sequence number based on the sequence number of the frame.

7. The network device (510) of any preceding claim, wherein frames of the plurality of redundant data streams (514, 516) comprise a sequence number in a redundancy tag of a frame header.

8. The network device (510) of any preceding claim, configured to determine the plurality of redundant data streams (514, 516) as redundant data streams.

9. The network device (510) of claim 8, wherein the network device (510) is configured to determine the plurality of redundant data streams (514, 516) as redundant data streams by comparing an identifier of the plurality of redundant data streams (514, 516) to an entry in a generation and recovery look-up table.

10. The network device (510) of any preceding claim comprising a sequence number registry (520) configured to store the stored sequence value.

11. The network device (510) of any preceding claim, wherein the network device (510) is an automotive network device.

12. A method (622) for processing a plurality of redundant data streams received at a network device, the method comprising:
receiving (624) a frame from one of the plurality of redundant data streams;
comparing (626) a sequence number of the frame to a stored sequence number;
if the sequence number of the frame is greater than the stored sequence number:
forwarding (628) the frame to an output terminal of the network device; and
updating (630) the stored sequence number based on the sequence number of the frame; and
if the sequence number of the frame is less than or equal to the stored sequence number:
discarding (632) the frame; and
refraining from updating the stored sequence number.

13. The method of claim 12, wherein updating the stored sequence number comprises replacing the stored sequence number with the sequence number of the frame.
